# EUROPEAN PATENT APPLICATION

(11) **EP 3 982 500 A1**
(43) Date of publication of application: **13.04.2022**
(21) Application number: 20201109.4
(22) Date of filing: 09.10.2020
(51) Int. Cl.: H02J 1/00, H01R 13/00, H02J 7/00

(54) **ADAPTOR DEVICE**

(71) Applicant: Lifetrons Switzerland Holdings Limited, Tuen Mun (HK)
(72) Inventor: TSENG, Kevin, Hong Kong (HK)
(74) Representative: Patrade A/S

(57) **Abstract**

An adaptor device (10) electrically connected to a power-supplying device (20) and a power-consuming device (30) includes a signal-transmission casing (11), control circuit module (12), two connectors (13), (14) and switch module (15). The control circuit module (12) is disposed in the signal-transmission casing (11) and has a signal-transmission element (121) electrically connected thereto. The connectors (13), (14) are electrically connected to the control circuit module (12). The switch module (15) is disposed on the signal-transmission casing (11) and electrically connected to the control circuit module (12) to switchably achieve electrical connection and electrical disconnection of the two connectors (13), (14). The switch module (15) controls the power-supplying device (20) to supply power to the power-consuming device (30). When a user holds the signal-transmission casing (11) by hand and allows metal contacts on the power-consuming device (30) to come into contact with the user's body, the control circuit module (12) sends a triggering signal through the signal-transmission element (121), signal-transmission casing (11), user's body, and metal contacts to the power-consuming device (30) to trigger operation thereof.

## Description

### BACKGROUND OF THE INVENTION

### 1. Field of the Invention

The present disclosure relates to adaptor devices, and in particular to an adaptor device for controlling power transmission between a power-supplying device and a power-consuming device and for controlling the starting and operation of the power-consuming device with the human body functioning as a medium of signal transmission.

### 2. Description of the Related Art

Owing to advancement in technology, the electronic industry develops rapidly, launching plenty 3C products on the market massively for users to choose from. Therefore, human beings nowadays enjoy enhanced life quality and have much fun.

All these 3C products are power-consuming devices, some of which are operated by a single power source, such as batteries. As a result, these 3C products are neither environment-friendly nor convenient to use. Furthermore, these 3C products have to contain batteries and thus are bulky. In addition, some of these 3C products are operated by rechargeable batteries chargeable whenever their connectors are connected to a power-supplying device. Last but not least, these 3C products lack ease of use, as it is impossible to controllably determine whether to recharge them or not.

A convenient adaptor connects the power device and the power-consuming device. When a user turns on the switch of the adaptor to cause the power device to supply power to the power-consuming device, the user can start using the power-consuming device. The adaptor enables the power-consuming device to connect to the power device and thus reduce the required volume of the power-consuming device. However, if the user forgets to turn off the adaptor, the power-consuming device will keep consuming power unnecessarily, thereby leading to a waste of energy.

### BRIEF SUMMARY OF THE INVENTION

An objective of the present disclosure is to provide an adaptor device whereby a power-supplying device is electrically connected to a power-consuming device directly and has a switch for controllably driving the power-supplying device to or not to supply power to the power-consuming device. Optionally, a power-consuming device with or without a metal contact can be electrically connected to the adaptor device. The power-consuming device without a metal contact is turned on or turned off through a switch on the adaptor device, thereby saving power. The power-consuming device with a metal contact comes into contact with the human body through the adaptor device held in a user's hand, such that the power-consuming device, its metal contact, the adaptor device and the human body together form a circuit loop. The circuit loop sends to the power-consuming device a signal for use in triggering, thereby allowing the power-consuming device to start and operate. Therefore, even if the user forgets to turn off the switch of the adaptor device, the triggering signal cannot be sent; it is because the circuit loop becomes an open circuit as soon as the power-consuming device with a metal contact leaves the human body (i.e., is no longer in contact with the human body). Therefore, the power-consuming device with a metal contact shuts down automatically as needed to save power. When the user's mobile device is electrically connected to the adaptor device of the present disclosure by an OTG signal line, power can be supplied to the power-consuming device; thus, both the power-consuming device and the adaptor device dispense with any battery, thereby reducing the required volume of the adaptor device.

To achieve at least the above objective, the present disclosure provides an adaptor device for electrically connecting a power-supplying device and a power-consuming device. The adaptor device comprises a signal transmission casing, control circuit module, first connector, second connector and switch module. The control circuit module is disposed in the signal transmission casing. The control circuit module has thereon a signal transmission element and is electrically connected to the signal transmission casing. The first connector is electrically connected to the control circuit module and electrically connected to one of the power-supplying device and the power-consuming device. The second connector is electrically connected to the control circuit module and electrically connected to the other one of the power-supplying device and the power-consuming device. The switch module is disposed on the signal transmission casing and electrically connected to the control circuit module to switchably achieve electrical connection and electrical disconnection of the first connector and the second connector.

Optionally, the signal transmission casing comprises a first half casing and a second half casing, and the second half casing is made of a metallic electrically conductive material and adapted to send a triggering signal.

Optionally, the signal transmission casing comprises a first half casing and a second half casing, and the second half casing has thereon an electrically conductive element for sending a triggering signal.

Optionally, the control circuit module further comprises a first circuit board, second circuit board and electrical connection line. The first circuit board is electrically connected to the second circuit board by the electrical connection line. The first connector and the second connector are electrically connected to the first circuit board. The signal transmission element is electrically connected to the first circuit board. The switch module is electrically connected to the second circuit board.

Optionally, the first connector is disposed at an end portion of the first half casing, and the second connector is disposed at an end portion of the second half casing, wherein the first connector is opposite the second connector.

Optionally, the switch module comprises a press light guiding element and a press switch, the press light guiding element being disposed on the first half casing, the press switch being electrically connected to the second circuit board disposed on the control circuit module and corresponding in position to the press light guiding element.

Optionally, the adaptor device further comprises at least one light emitting component disposed on the second circuit board of the control circuit module and electrically connected thereto, wherein the light emitting component emits light through the press light guiding element of the switch module.

Optionally, the light emitting component is a light-emitting diode.

Optionally, the first connector is USB female connector.

Optionally, the first connector is USB type A female connector.

Optionally, the first connector is USB type C female connector.

Optionally, the second connector is USB female connector.

Optionally, the second connector is USB type A female connector.

Optionally, the second connector is USB type C female connector.

The adaptor device is electrically connected to the power-supplying device and the power-consuming device directly, such that the power-consuming device can become ready for use immediately after the power-supplying device has supplied power to the power-consuming device. The power-consuming device without a metal contact is turned on or turned off through a switch on the adaptor device, thereby saving power. The power-consuming device with a metal contact comes into contact with the human body through the adaptor device held in a user's hand, such that the power-consuming device, its metal contact, the adaptor device and the human body together form a circuit loop. The circuit loop sends to the power-consuming device a signal for use in triggering, thereby allowing the power-consuming device to start and operate. Therefore, even if the user forgets to turn off the switch of the adaptor device, the triggering signal cannot be sent; it is because the circuit loop becomes an open circuit as soon as the power-consuming device with a metal contact leaves the human body (i.e., is no longer in contact with the human body). Therefore, the power-consuming device with a metal contact shuts down automatically as needed to save power. When the user's mobile device is electrically connected to the adaptor device of the present disclosure by an OTG signal line, power can be supplied to the power-consuming device; thus, both the power-consuming device and the adaptor device dispense with any battery, thereby reducing the required volume of the adaptor device. Therefore, the adaptor device of the present disclosure features enhanced ease of use, power saving, and reduced volume.

### BRIEF DESCRIPTION OF THE DRAWINGS

FIG. 1 is an exploded view of an adaptor device, power-supplying device and power-consuming device according to an embodiment of the present disclosure.
FIG. 2 is a block diagram of the adaptor device, power-supplying device and power-consuming device according to an embodiment of the present disclosure.
FIG. 3 is a cross-sectional view of the adaptor device according to an embodiment of the present disclosure.
FIG. 4 is another cross-sectional view of the adaptor device according to the embodiment illustrated by FIG. 3.
FIG. 5 is a perspective view of the adaptor device according to another embodiment of the present disclosure.
FIG. 6 is a cross-sectional view of the adaptor device according to the embodiment illustrated by FIG. 5.
FIG. 7 is a schematic view of application of the adaptor device, power-supplying device and power-consuming device according to an embodiment of the present disclosure.
FIG. 8 is another schematic view of application of the adaptor device, power-supplying device and power-consuming device according to an embodiment of the present disclosure.

### DETAILED DESCRIPTION OF THE INVENTION

To facilitate understanding of the object, characteristics and effects of this present disclosure, embodiments together with the attached drawings for the detailed description of the present disclosure are provided.

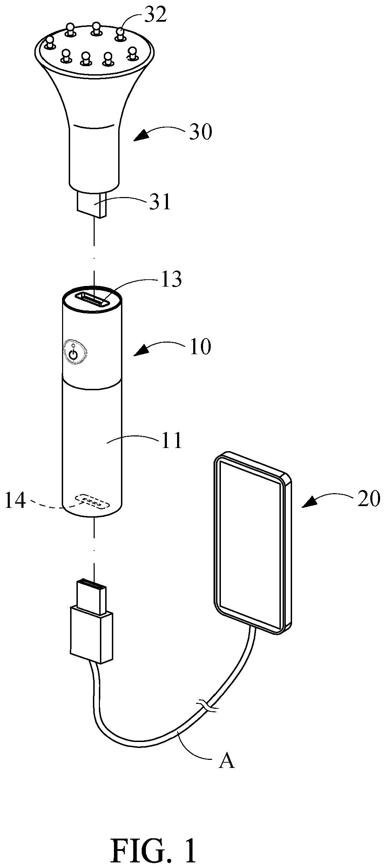

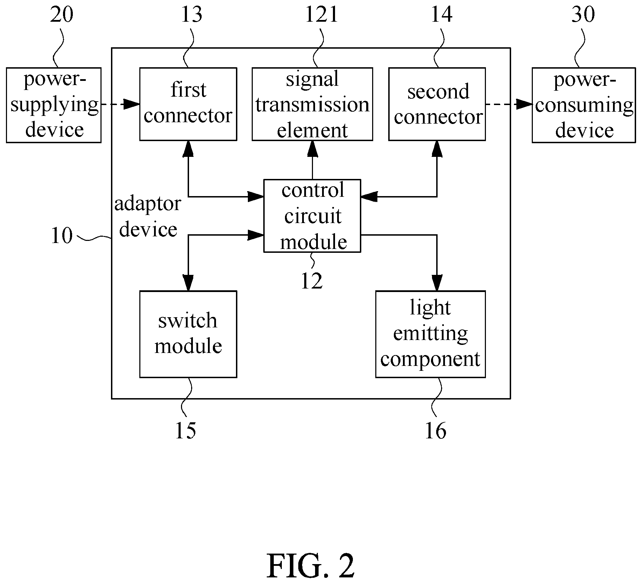

An adaptor device 10 is provided in an embodiment of the present disclosure. Referring to FIGs. 1, 2, the adaptor device 10 is electrically connected to a power-supplying device 20 and a power-consuming device 30. The power-supplying device 20 is electrically connected to the adaptor device 10 by a transmission line A. The power-consuming device 30 is electrically connected to the adaptor device 10 by a connector 31.

For instance, the power-supplying device 20 is a mobile device, tablet, desktop computer, laptop computer, mobile power or a power adaptor. The ease of use of the adaptor device 10 is enhanced by making good use of a power-supplying device which can supply power and is readily available.

For instance, the transmission line A is an OTG transmission line.

For instance, the power-consuming device 30 is a functional massage head. The functional massage head has thereon a plurality of metal contacts 32. A user holds the adaptor device 10 whereby the metal contacts 32 of the power-consuming device 30 come into contact with the user's body. The way of allowing the metal contacts 32 on the functional massage head to operate in conjunction with the adaptor device 10 is described later.

Referring to FIG. 2 through 4, for example, the adaptor device 10 comprises a signal transmission casing 11, control circuit module 12, first connector 13, second connector 14 and switch module 15. The first connector 13 is electrically connected to one of the power-supplying device 20 and the power-consuming device 30. The second connector 14 is electrically connected to the other one of the power-supplying device 20 and the power-consuming device 30.

The control circuit module 12 is disposed in the signal transmission casing 11. The control circuit module 12 has thereon a signal transmission element 121 and is electrically connected to the signal transmission casing 11. The first connector 13 and the second connector 14 are electrically connected to the control circuit module 12. The switch module 15 is disposed on the signal transmission casing 11 and the control circuit module 12 and electrically connected to the control circuit module 12. The control circuit module 12 sends, through the signal transmission casing 11, the signal transmission element 121, the user's body, and the metal contacts 32 of the power-consuming device 30, a triggering signal to the power-consuming device 30 to trigger the operation thereof.

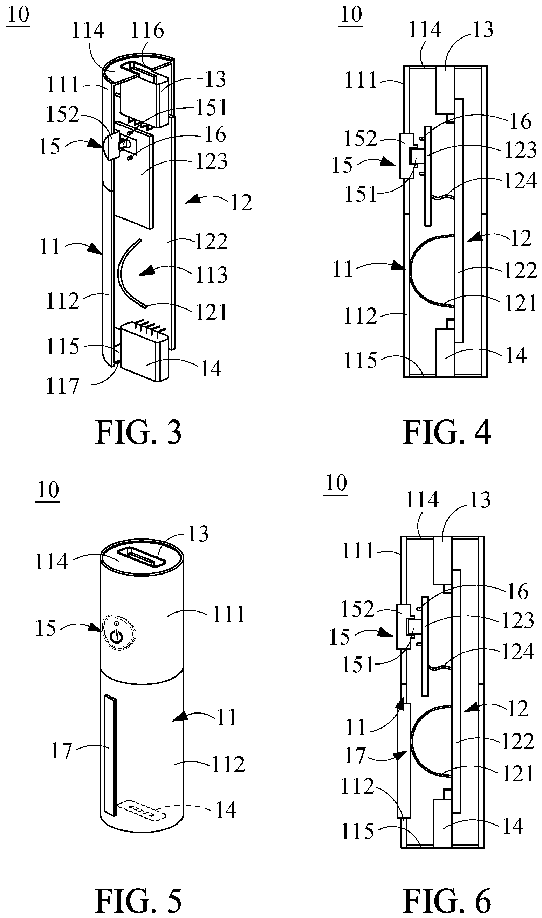

The structure of the adaptor device 10 is illustrated by two embodiments, but the present disclosure is not limited thereto. For instance, in the first embodiment illustrated by FIGs. 3, 4 regarding the adaptor device 10, the signal transmission casing 11 comprises a first half casing 111, a second half casing 112 and a receiving space 113. The receiving space 113 receives the control circuit module 12. The second half casing 112 is made of a metallic electrically conductive material and adapted to send a signal. The first half casing 111 is made of a metallic electrically conductive material or a plastic material.

The first half casing 111 has a first end portion 114. The second half casing 112 has a second end portion 115. The first end portion 114 is opposite the second end portion 115. The first end portion 114 has a first hole 116. The second end portion 115 has a second hole 117. The first connector 13 is disposed at the first end portion 114, electrically connected to the control circuit module 12, and exposed from the signal transmission casing 11 by the first hole 116. The second connector 14 is disposed at the second end portion 115, electrically connected to the control circuit module 12, and exposed from the signal transmission casing 11 by the second hole 117. The switch module 15 is disposed on the first half casing 111 of the signal transmission casing 11 and electrically connected to the control circuit module 12.

Referring to FIG. 3 and FIG. 4, the control circuit module 12 comprises the signal transmission element 121, first circuit board 122, second circuit board 123 and electrical connection line 124.

The first circuit board 122 has thereon a plurality of wirings (not shown). The second circuit board 123 has thereon a plurality of wirings (not shown). The first circuit board 122 is electrically connected to the second circuit board 123 by the electrical connection line 124. The signal transmission element 121 is disposed on the first circuit board 122, electrically connected to wirings on the first circuit board 122, and electrically connected to the second half casing 112.

The first connector 13 is disposed on the first circuit board 122 and electrically connected to wirings on the first circuit board 122. The first connector 13 faces the first end portion 114 of the first half casing 111 of the signal transmission casing 11 and is exposed from the signal transmission casing 11 by the first hole 116.

The second connector 14 is disposed on the first circuit board 122 and electrically connected to wirings on the first circuit board 122. The second connector 14 faces the second end portion 115 of the second half casing 112 of the signal transmission casing 11 and is exposed from the signal transmission casing 11 by the second hole 117.

For instance, the first connector 13 is USB female connector. In a variant embodiment, the first connector 13 is USB type C female connector. In a variant embodiment, the first connector 13 is USB type A female connector.

For instance, the second connector 14 is USB female connector. In a variant embodiment, the second connector 14 is USB type A female connector. In a variant embodiment, the second connector 14 is USB type C female connector.

For instance, the switch module 15 comprises a press switch 151 and a press light guiding element 152.

The press switch 151 is disposed on the second circuit board 123, electrically connected to the second circuit board 123, and electrically connected to the first connector 13, second connector 14 and wirings on the first circuit board 122 by the electrical connection line 124.

The press light guiding element 152 is disposed on the first half casing 111 of the signal transmission casing 11 and corresponds in position to the press switch 151.

When pressed by the user, the press light guiding element 152 presses downward on the press switch 151 to control the press switch 151 to switchably achieve electrical connection and electrical disconnection of the first connector 13 and the second connector 14.

For instance, at least one light emitting component 16 is disposed on the second circuit board 123 of the control circuit module 12. The light emitting component 16 is near the press switch 151. The light emitting component 16 is electrically connected to the wirings on the second circuit board 123. Light emitted from the light emitting component 16 passes through the press light guiding element 152 before reaching the exterior to serve as a prompt. The light emitting component 16 is a light-emitting diode (LED).

Referring to FIG. 5 and FIG. 6, the second embodiment is substantially the same as the first embodiment except for the distinguishing technical features described below. In the second embodiment, the second half casing 112 of the signal transmission casing 11 has thereon an electrically conductive element 17 and is electrically connected to the signal transmission element 121. Therefore, the signal transmission casing 11 sends a triggering signal through the electrically conductive element 17 disposed on the second half casing 112.

In second embodiment, given the electrically conductive element 17, the second half casing 112 of the signal transmission casing 11 is made of a non-electrically conductive material or is made of a metallic electrically conductive material.

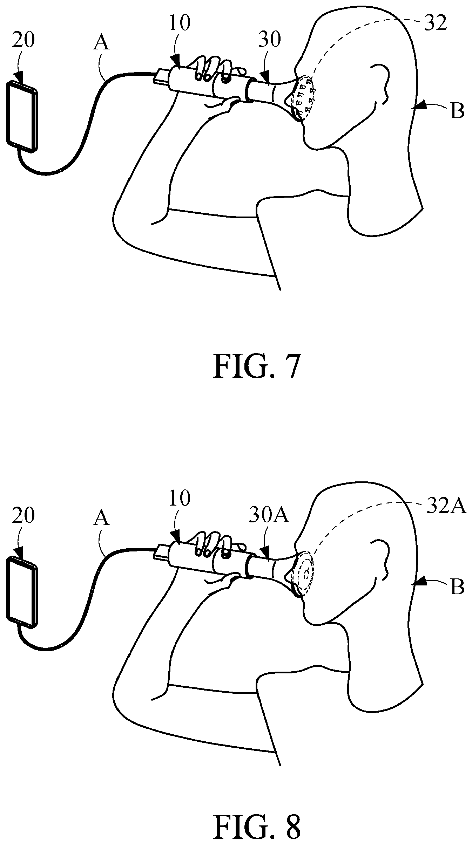

The first application of the adaptor device 10, the power-supplying device 20 and the power-consuming device 30 is depicted with FIG. 7. Referring to FIG. 7, the second half casing 112 of the signal transmission casing 11 is made of a metallic electrically conductive material. In a variant embodiment, the electrically conductive element 17 is disposed on the second half casing 112 of the signal transmission casing 11, serving the same application purpose.

To start using the adaptor device 10, user B electrically connects the connector 31 of the power-consuming device 30 to the first connector 13 (as shown in FIG. 1) and electrically connects the power-supplying device 20 to the second connector 14 through the transmission line A (as shown in FIG. 1). At this moment, the power-supplying device 20 supplies power to the adaptor device 10 through the transmission line A, and the light emitting component 16 emits light, but there has not yet been any electrical connection of the first connector 13 and the second connector 14. Therefore, the light emitted from the light emitting component 16 serves to inform user B of the fact that the power-supplying device 20 has supplied power to the adaptor device 10. The light emitted from the light emitting component 16 further serves to remind user B that it is a switch, and user B can press the switch module 15 to control the adaptor device 10. Therefore, both ease of use and user experience are enhanced.

After user B has controllably actuated the electrical connection of the first connector 13 and the second connector 14 through the switch module 15, the switch module 15 controls the light emitting component 16 to stop emitting light or to keep emitting light. Then, user B holds the second half casing 112 of the adaptor device 10 by hand and allows the metal contacts 32 on the power-consuming device 30 to come into contact with the face or body of user B. At this moment, the control circuit module 12, the signal transmission element 121, the second half casing 112 of the signal transmission casing 11, the body of user B, the metal contacts 32 of the power-consuming device 30, and internal wirings of the power-consuming device 30 together form a loop. Therefore, the control circuit module 12 sends, through the signal transmission element 121, the second half casing 112 of the signal transmission casing 11, and the body of user B, a triggering signal to the metal contacts 32, thereby allowing the power-consuming device 30 to start and operate in accordance with the triggering signal, with a view to massaging user B.

Once user B removes the power-consuming device 30, the medium for signal transmission, i.e., the body of user B, will vanish; thus, the separation of the body of user B and the metal contacts 32 of the power-consuming device 30 breaks the loop, and the power-consuming device 30 stops operating, thereby saving power.

Furthermore, power can be saved even if user B is holding the adaptor device 10 by hand, because the operation of the power-consuming device 30 remains impossible in the absence of contact between the body of user B and the metal contacts 32 of the power-consuming device 30.

In this embodiment, although the triggering signal is transmitted via a medium, i.e., the human body, it has little effect on the human body and thus is not harmful to the health of users. It is because the control circuit module 12 limits the maximum current of the triggering signal to around 50µA.

In another embodiment, when the signal transmission casing 11 and the power-consuming device 30 do not need to transmit any signals through the human body, it is feasible for the switch module 15 to switch the first connector 13 and the second connector 14 between electrical connection and electrical disconnection, so as to directly control the power-supplying device 20 to or not to supply power to the power-consuming device 30.

The second application of the adaptor device 10, the power-supplying device 20 and the power-consuming device 30 is depicted with FIG. 8. Referring to FIG. 8, the adaptor device 10 is connected to the power-supplying device 20 and another power-consuming device 30A. The power-consuming device 30A is a light-penetrable massage head, and the power-consuming device 30A has at least one metal contact 32A.

After user B has controllably actuated the electrical connection of the first connector 13 and the second connector 14 through the switch module 15, the switch module 15 controls the light emitting component 16 to stop emitting light or to keep emitting light. Meanwhile, the power-consuming device 30A begins to emit light. Then, user B holds the second half casing 112 of the adaptor device 10 by hand and allows the metal contacts 32A on the power-consuming device 30A to come into contact with the face or body of user B. At this moment, the control circuit module 12, the signal transmission element 121, the second half casing 112 of the signal transmission casing 11, the body of user B, the metal contacts 32A of the power-consuming device 30A, and internal wirings of the power-consuming device 30A together form a loop. Therefore, the control circuit module 12 sends, through the signal transmission element 121, the second half casing 112 of the signal transmission casing 11, and the body of user B, a triggering signal to the metal contacts 32A, thereby allowing the power-consuming device 30A to start and operate in accordance with the triggering signal, with a view to massaging user B.

Once user B removes the power-consuming device 30A, the medium for signal transmission, i.e., the body of user B, will vanish; thus, the separation of the body of user B and the metal contacts 32A of the power-consuming device 30A breaks the loop, and the power-consuming device 30A stops operating, thereby saving power. Furthermore, power can be saved even if user B is holding the adaptor device 10 by hand, because the operation of the power-consuming device 30A remains impossible in the absence of contact between the body of user B and the metal contacts 32A of the power-consuming device 30A.

In this embodiment, although the triggering signal is transmitted via a medium, i.e., the human body, it has little effect on the human body and thus is not harmful to the health of users. It is because the control circuit module 12 limits the maximum current of the triggering signal to around 50µA.

While the present disclosure has been described by means of specific embodiments, numerous modifications and variations could be made thereto by those skilled in the art without departing from the scope and spirit of the present disclosure set forth in the claims.

## Claims

1. An adaptor device (10) electrically connected to a power-supplying device (20) and a power-consuming device (30), the adaptor device (10) comprising:
a signal transmission casing (11);
a control circuit module (12) disposed in the signal transmission casing (11), having a signal transmission element (121), and electrically connected to the signal transmission casing (11);
a first connector (13) electrically connected to the control circuit module (12) and electrically connected to one of the power-supplying device (20) and the power-consuming device (30);
a second connector (14) electrically connected to the control circuit module (12) and electrically connected to the other one of the power-supplying device (20) and the power-consuming device (30); and
a switch module (15) disposed on the signal transmission casing (11), electrically connected to the control circuit module (12), and adapted to switchably achieve electrical connection and electrical disconnection of the first connector (13) and the second connector (14).

2. The adaptor device (10) of claim 1, wherein the signal transmission casing (11) comprises a first half casing (111) and a second half casing (112), wherein the second half casing (112) is made of a metallic electrically conductive material and adapted to send a triggering signal.

3. The adaptor device (10) of claim 1, wherein the signal transmission casing (11) comprises a first half casing (111) and a second half casing (112), wherein the second half casing (112) has thereon an electrically conductive element (17) for sending a triggering signal.

4. The adaptor device (10) of claim 2, wherein the control circuit module (12) further comprises a first circuit board (122), a second circuit board (123) and an electrical connection line (124), the first circuit board (122) being electrically connected to the second circuit board (123) by the electrical connection line (124), being electrically connected to the first connector (13) and the second connector (14), and being electrically connected to the signal transmission element (121), wherein the switch module (15) is electrically connected to the second circuit board (123).

5. The adaptor device (10) of claim 3, wherein the control circuit module (12) further comprises a first circuit board (122), a second circuit board (123) and an electrical connection line (124), the first circuit board (122) being electrically connected to the second circuit board (123) by the electrical connection line (124), being electrically connected to the first connector (13) and the second connector (14), and being electrically connected to the signal transmission element (121), wherein the switch module (15) is electrically connected to the second circuit board (123).

6. The adaptor device (10) of claim 4, wherein the first connector (13) is disposed at an end portion (114) of the first half casing (111), and the second connector (14) is disposed at an end portion (115) of the second half casing (112), wherein the first connector (13) is opposite the second connector (14).

7. The adaptor device (10) of claim 5, wherein the first connector (13) is disposed at an end portion (114) of the first half casing (111), and the second connector (14) is disposed at an end portion (115) of the second half casing (112), wherein the first connector (13) is opposite the second connector (14).

8. The adaptor device (10) of claim 4, wherein the switch module (15) comprises a press light guiding element (152) and a press switch (151), the press light guiding element (152) being disposed on the first half casing (111), the press switch (151) being electrically connected to the second circuit board (123) disposed on the control circuit module (12) and corresponding in position to the press light guiding element (152).

9. The adaptor device (10) of claim 5, wherein the switch module (15) comprises a press light guiding element (152) and a press switch (151), the press light guiding element (152) being disposed on the first half casing (111), the press switch (151) being electrically connected to the second circuit board (123) disposed on the control circuit module (12) and corresponding in position to the press light guiding element (152).

10. The adaptor device (10) of claim 8, wherein the adaptor device (10) further comprises at least one light emitting component (16) disposed on the second circuit board (123) of the control circuit module (12) and electrically connected thereto, wherein the light emitting component (16) emits light through the press light guiding element (152) of the switch module (15).

11. The adaptor device (10) of claim 9, wherein the adaptor device (10) further comprises at least one light emitting component (16) disposed on the second circuit board (123) of the control circuit module (12) and electrically connected thereto, wherein the light emitting component (16) emits light through the press light guiding element (152) of the switch module (15).

12. The adaptor device (10) of claim 10, wherein the light emitting component (16) is a light-emitting diode.

13. The adaptor device (10) of claim 11, wherein the light emitting component (16) is a light-emitting diode.

14. The adaptor device (10) of claim 1, wherein the first connector (13) is USB female connector.

15. The adaptor device (10) of claim 1, wherein the second connector (14) is USB female connector.
